Europäisches Patentamt

European Patent Office

Office européen des brevets

(19)

(11) EP 0 767 519 A1

(12) # DEMANDE DE BREVET EUROPEEN

(43) Date de publication:
09.04.1997 Bulletin 1997/15

(51) Int Cl.6: **H01S 3/23**, H01S 3/0941

(21) Numéro de dépôt: 96402096.0

(22) Date de dépôt: 01.10.1996

(84) Etats contractants désignés:
DE GB

(30) Priorité: 06.10.1995 FR 9511793

(71) Demandeur: THOMSON-CSF
75008 Paris (FR)

(72) Inventeurs:
• Larat, Christian, Thomson-CSF, SCPI
92402 Courbevoie Cedex (FR)
• Feugnet, Gilles, Thomson-CSF, SCPI
92402 Courbevoie Cedex (FR)
• Schwarz, Muriel, Thomson-CSF, SCPI
92402 Courbevoie Cedex (FR)

(54) **Dispositif d'amplification optique**

(57) L'invention conceme un dispositif d'amplification optique comprenant un milieu amplificateur (m) insérés entre deux miroirs (M₁) et (M₂), et une source de pompage optique (P).

Les miroirs (M₁) et (M₂) sont des miroirs confocaux dont le plan focal est situé au voisinage du centre du milieu non linéaire. Ce milieu (m) possède une forme de type allumette présentant un grand axe selon une direction ($D_x$) faisant un angle ($\alpha/2$) avec l'axe optique de la cavité définie par les deux miroirs et le milieu amplificateur. Cette architecture permet le multipassage d'une onde optique incidente au sein du dispositif d'amplification conduisant à une augmentation des performances dudit dispositif.

FIG.1a

EP 0 767 519 A1

## Description

Le domaine de l'invention est celui des amplificateurs optiques mettant en jeu l'effet laser et pouvant être utilisés pour obtenir des lasers de grande puissance à partir d'oscillateur de faible ou moyenne puissance.

De façon générale, l'amplification laser met en jeu une émission stimulée correspondant à la libération de photons, par retombée à un niveau d'énergie inférieur. Dans le cas de cette émission stimulée, les rayonnements inducteurs et induits ont la même phase, ont la même direction et la même polarisation créant une véritable amplification de la lumière. Cependant, un rayonnement arrivant sur un milieu donné à une probabilité extrêmement plus importante d'être absorbé que de provoquer une émission stimulée ; pour générer l'émission stimulée il est nécessaire d'introduire une inversion de population entre état fondamental et état excité, au sein du milieu actif, cette inversion de population est provoquée par une excitation extérieure appelée habituellement pompage. C'est pourquoi, classiquement un amplificateur laser est composé d'un milieu actif pouvant générer une émission stimulée et d'une source de pompage. Le milieu actif peut être un milieu solide (verre, cristal comme le YAG, saphir ...) contenant un élément actif (élément de transition, terre rare comme le néodyme ; le chrome, le titane ...). La source de pompage optique présente une longueur d'onde d'émission adaptée aux bandes d'absorption de l'élément actif. Par exemple, l'ion $Nd^{3+}$ dans le cristal YAG présente une absorption à une longueur d'onde de 808 nm, compatible avec l'émission de diodes laser de type GaAs/GaAlAs.

Selon ce principe d'amplification, un faisceau laser incident de longueur d'onde $\lambda_s$ est introduit dans le milieu amplificateur capable lorsqu'il est pompé optiquement à une longueur d'onde $\lambda_p$, d'émettre des photons à la longueur d'onde $\lambda_s$. Pour obtenir une amplification efficace, il est important d'avoir un bon recouvrement entre la région du milieu amplificateur dans laquelle passe le faisceau incident et la zone du milieu amplificateur pompée optiquement.

Pour augmenter les performances d'un dispositif d'amplification optique tel que celui décrit précédemment, il est proposé dans l'invention une architecture particulière de dispositif d'amplification permettant le multipassage du faisceau incident à amplifier, au travers du milieu amplificateur.

Plus précisément, l'invention a pour objet un dispositif d'amplification optique comprenant un milieu amplificateur solide de géométrie de type parallélépipédique ou présentant un grand axe selon une direction et une source de pompage optique du milieu amplificateur, caractérisé en ce que :

- le milieu amplificateur est inséré entre deux miroirs concaves et confocaux dont le plan focal est situé au voisinage du centre du milieu, la direction dudit milieu faisant un angle $\alpha/2$ avec la normale au plan focal des miroirs ;

- ledit dispositif comprend des moyens d'entrée de faisceau optique à amplifier et des moyens de sortie de faisceau optique amplifié.

De préférence, le pompage optique peut être effectué transversalement par rapport à l'axe de la cavité optique par l'ensemble des deux miroirs et du milieu amplificateur.

Le pompage optique peut également être effectué longitudinalement par rapport à l'axe de la cavité définie ci-dessus.

La source de pompage peut comprendre avantageusement une ou plusieurs diodes laser, pouvant être déportées du milieu amplificateur par l'intermédiaire de fibres optiques de manière à limiter les problèmes de dissipation thermique au sein du milieu amplificateur.

L'invention a aussi pour objet un dispositif d'amplification optique dans lequel les miroirs $M_1$ et $M_2$ sont intégrés au milieu amplificateur.

Avantageusement, les faces du milieu amplificateur perpendiculaires à l'axe optique du dispositif, peuvent comprendre une partie courbe, munie d'une part d'un miroir $M_1$ ou $M_2$ et d'autre part une partie, transparente au faisceau optique à amplifier.

L'invention sera mieux comprise et d'autres avantages apparaîtront à la lecture de la description qui va suivre donnée à titre non limitatif et grâce aux figures annexées parmi lesquelles :

- la figure 1a schématise un exemple de dispositif d'amplification selon l'invention ;
- la figure 1b montre une vue agrandie du milieu amplificateur m, utilisé dans le dispositif d'amplification illustré en figure 1a ;
- la figure 2 illustre un exemple de pompage transversal utilisant une source de pompage et des réseaux de fibres ;
- la figure 3a montre l'allure gaussienne en intensité d'un faisceau laser incident ;
- la figure 3b illustre le "waist" d'un faisceau optique gaussien ;
- la figure 4 illustre un exemple de dispositif d'amplification selon l'invention dans lequel les miroirs $M_1$ et $M_2$ sont intégrés au milieu amplificateur m.

De façon générale, le dispositif d'amplification selon l'invention comprend un milieu amplificateur solide de type verre ou cristal, dopé avec un élément actif pouvant être de type néodyme, chrome, titane ..., pompé par une source capable d'introduire l'inversion de population nécessaire entre état fondamental et état excité pour générer l'amplification voulue. La géométrie du milieu amplificateur peut avantageusement être de type plaque.

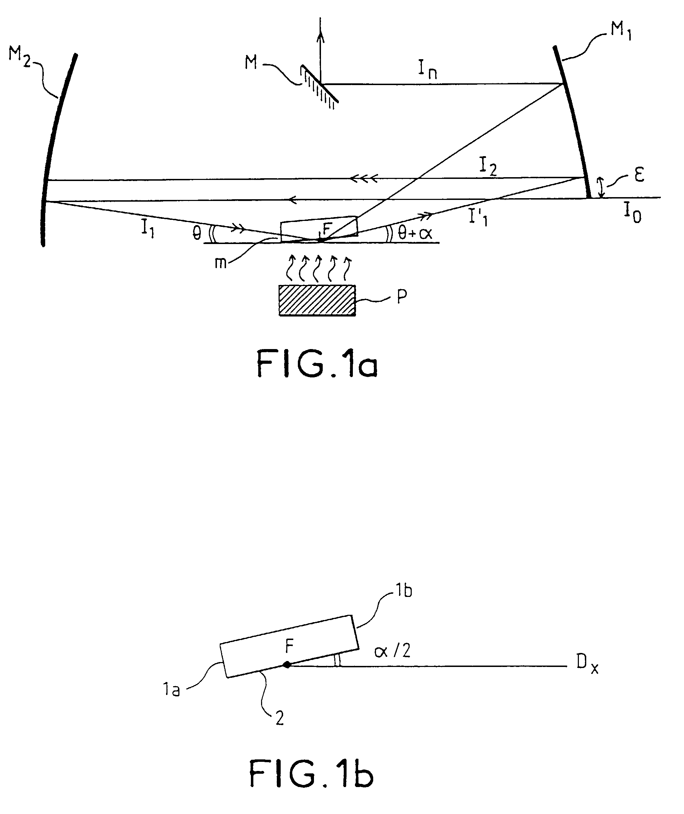

La figure 1 schématise un exemple de dispositif selon l'invention dans lequel le milieu amplificateur présente une forme parallélépipédique de type allumette.

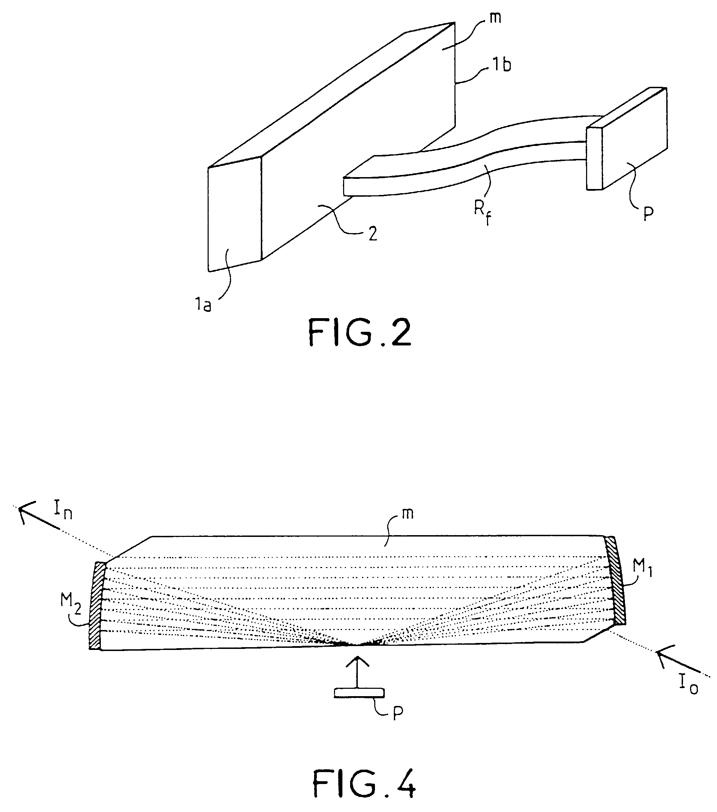

Dans cet exemple le milieu m est pompé transversalement par une source de pompage P. Cette source de pompage peut être un ensemble de diodes laser permettant d'obtenir une puissance de pompage élevée. Pour pallier les problèmes de dissipation thermique, il peut être avantageux d'utiliser un réseau Rf de fibres optiques connectées d'une part à des diodes laser, d'autre part couplées au milieu actif solide comme l'illustre la figure 2.

Comme l'illustre la figure 1a, le milieu amplificateur est placé entre deux miroirs $M_1$ et $M_2$ ; son grand axe est incliné d'un angle $\alpha/2$ par rapport à l'axe de la cavité $D_x$ de manière à générer le multipassage d'une onde incidente, au sein des deux miroirs. La figure 1b montre une vue agrandie du milieu amplificateur m, utilisé dans le dispositif schématisé en figure 1a. Les faces latérales du milieu m (faces 1a et 1b) ainsi que la face 2 couplée à la source de pompage doivent être de très bonne qualité optique. Le faisceau incident à amplifier, de type faisceau laser entre par la face 1a et ressort par la face 1b après s'être réfléchi sur la face 2 par réflexion totale. Les faces 1a et 1b peuvent être traitées antireflet (pour minimiser les pertes d'insertion). Ces faces peuvent aussi ne pas être planes pour compenser d'éventuelles aberrations optiques, induites sur le faisceau laser par un effet thermique dû aux opérations de pompage optique.

Dans les milieux amplificateurs précités utilisés dans l'invention, on dispose de coefficients d'absorption de la pompe, élevés (> 5cm$^{-1}$) au voisinage de la face 2 et donc à une localisation du gain en matière d'amplification surtout important au voisinage de cette face, zone dans laquelle est de préférence introduit le faisceau laser à amplifier.

En utilisant la réflexion totale sur la face 2 d'un faisceau incident dont l'incidence par rapport à la normale à la face 2 est suffisamment grande (soit $\theta$ faible), on parvient à obtenir un bon recouvrement entre faisceau incident et zone de pompage optique.

Dans l'exemple de dispositif illustré en figure 1, on réalise une cavité confocale avec deux miroirs paraboliques $M_1$ et $M_2$ dont le foyer est placé au centre du milieu m. Le milieu d'entrée présente une ouverture ou une dissymétrie de manière à permettre l'entrée du faisceau incident à amplifier, dans la cavité ainsi définie.

Dans cet exemple, le faisceau incident $I_o$ entre parallèlement à l'axe optique de la cavité, puis est focalisé par le miroir $M_1$ en faisceau $I_1$, au foyer F, avec un angle d'incidence $\theta$.

Lorsque la face 2 est parallèle à l'axe optique ce faisceau incident ressort de la cavité à l'endroit où il est rentré et aucune opération de multipassage au sein de la cavité n'a pu être réalisée.

C'est pourquoi, dans le dispositif de l'invention, le grand axe du milieu amplificateur, fait un angle $\alpha/2$ non nul avec l'axe optique de la cavité. Après réflexion sur le miroir $M_1$, le faisceau $I_1$ incident est renvoyé au foyer F des miroirs, puis est réfléchi en faisceau $I'_1$ au sein du milieu amplificateur selon une direction faisant un angle $\theta + \alpha$ sur le miroir $M_2$. Ce faisceau $I'_1$ puisqu'issu du foyer F peut à nouveau être réfléchi par le miroir $M_2$ parallèlement à l'axe de la cavité ; le faisceau $I'_1$ est réfléchi au niveau du miroir $M_1$ en un faisceau $I_2$, parallèle au faisceau incident $I_o$, mais espacé d'une distance $\varepsilon$ par rapport à ce dernier.

Le cycle peut être répété plusieurs fois, à chaque passage, le faisceau est amplifié dans le milieu amplificateur, en fin d'opération le faisceau In amplifié n fois peut être extrait de la cavité par une ouverture adéquate au niveau d'un des miroirs ou être extrait grâce à la présence d'un miroir M placé dans la cavité comme l'illustre la figure 1 (pour la compréhension de la figure 1, seuls les premiers faisceaux amplifiés et le dernier faisceau amplifié In ont été représentés sur cette figure).

Il est à noter que l'espacement $\varepsilon$ entre les faisceaux reste sensiblement constant entre différents passages, pour des angles d'incidence $\theta$ pas trop élevés (inférieurs à environ 35°).

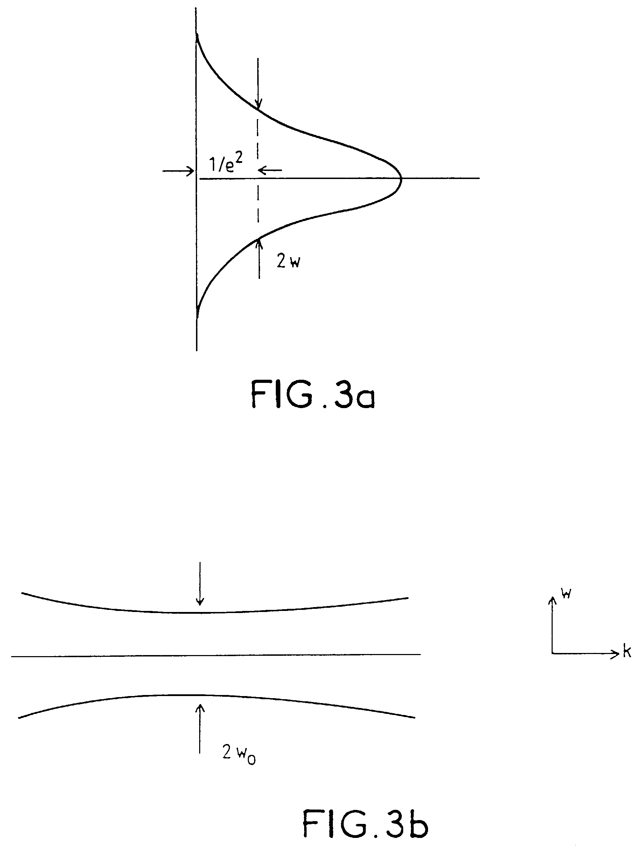

En effet, le faisceau incident, à amplifier, est de forme gaussienne et l'on en définit classiquement le diamètre 2w à une hauteur $1/e^2$ comme l'illustre la figure 3a. Cette dimension 2w n'est pas constante le long de la direction de propagation k et passe par un minimum $2w_o$ encore appelée "waist", comme l'illustre la figure 3b. En plaçant le "waist" du faisceau incident dans le plan focal des miroirs $M_1$ et $M_2$ (c'est-à-dire le plan perpendiculaire à l'axe optique du dispositif et passant par F), il est connu que le "waist" après réflexion sur un des miroirs $M_1$ ou $M_2$ est également situé dans ce plan focal. La relation entre ces deux "waist" est donnée par l'équation suivante :

$$wo_1\, wo_2 = \lambda f/\pi$$

$wo_1$ étant le waist avant réflexion sur un miroir
$wo_2$ étant le waist après réflexion sur un miroir
$\lambda$ étant la longueur d'onde du faisceau incident à amplifier
f étant la distance focale des miroirs

Après réflexion sur le second miroir, le "waist" $wo_3$ est sensiblement égal au "waist" $wo_1$ ; ainsi la taille du faisceau dans le milieu amplificateur se conserve d'un passage à l'autre.

Exemple de réalisation d'un dispositif d'amplification utilisant deux miroirs paraboliques $M_1$ et $M_2$ et un pompage transversal au sein d'un milieu amplificateur de forme parallélépipédique.

Une cavité de 20 cm est constituée de deux miroirs $M_1$ et $M_2$ de forme parabolique, dont le rayon de courbure sur l'axe optique est également de 20 cm, la distance focale des miroirs confocaux étant de 10 cm. Le milieu amplificateur est pompé par une barrette de diodes laser correspondant à une longueur de pompage voisine du cm. Un faisceau laser incident de longueur d'onde 1 µm, présentant un "waist" d'environ 330 µm est introduit dans la cavité. Après réflexion sur l'un des miroirs, le "waist" du faisceau au niveau du milieu amplificateur est voisin de 100 µm, son incidence $\theta$ étant de l'ordre d'une dizaine de degrés. Le milieu amplificateur est orienté dans la cavité de manière à ce que son grand axe fasse un angle d'environ 0,5° avec l'axe optique de la cavité.

Grâce à cette orientation, il est possible d'effectuer une dizaine de passages avec des miroirs de moins de 25 mm d'extension latérale, les différents faisceaux amplifiés successivement étant séparés d'une distance $\varepsilon$ voisine de 2 mm, correspondant au moins à deux largeurs de faisceaux gaussiens pris à la base et non à une hauteur de $1/e^2$, pour disposer du minimum de pertes.

Un miroir M est placé dans la cavité pour extraire le faisceau ainsi amplifié.

Dans l'exemple ci-dessus, le faisceau incident est introduit parallèlement à l'axe optique de la cavité et présente une incidence $\theta$ dans le milieu amplificateur, après réflexion sur l'un des miroirs. Selon d'autres variantes de l'invention il est possible de focaliser directement le faisceau incident à amplifier, au foyer F, selon une incidence $\theta$.

Il est également possible de renvoyer le faisceau de sortie sur lui-même avec par exemple un miroir à conjugaison de phase, pour doubler le nombre de passages.

De même, un élément transparent de puissance optique nulle peut être introduit entre les miroirs $M_1$ et $M_2$ pour compenser la différence de longueur optique introduite par le milieu amplificateur, qui présente une différence d'indice optique avec le milieu dans lequel il est mis.

Le dispositif d'amplification selon l'invention peut également être réalisé avec des miroirs sphériques de réalisation plus simple que celle de miroirs paraboliques.

Il apparaît au niveau du foyer F, une légère astigmatie (tous les faisceaux lumineux ne convergent pas rigoureusement au même point). Cette astigmatie peut être corrigée en donnant une forme courbe aux faces 1a et 1b du milieu amplificateur m.

Dans une variante de l'invention, le dispositif d'amplification peut présenter une structure très compacte dans laquelle une source de pompe et un milieu amplificateur auquel sont intégrés des miroirs permettent de mettre en oeuvre l'invention.

Un exemple d'architecture de cette variante est illustré en figure 4. Typiquement, le milieu amplificateur peut faire quelques centimètres de long. Les entrée/sortie du faisceau laser peuvent être réalisées de la manière suivante :

Dans cette variante de l'invention, les faces 1a et 1b présentent une partie polie de manière à présenter une surface parabolique ou sphérique sur laquelle sont réalisés les miroirs $M_1$ ou $M_2$ par dépôt de multicouches diélectriques, une autre partie étant polie de manière à être à incidence de Brewster pour assurer la transmission complète du faisceau incident dans le milieu amplificateur, dans le cas d'un faisceau incident polarisé.

Dans une autre variante, on peut envisager de polir les faces 1a et 1b de manière à ce qu'elles présentent une surface parabolique ou sphérique, sur laquelle on réalise localement les miroirs $M_1$ ou $M_2$ et localement des couches antireflet permettant l'entrée et la sortie du faisceau laser;

## Revendications

1. Dispositif d'amplification optique comprenant un milieu amplificateur solide (m) de géométrie de type parallélépipédique présentant un grand axe selon une direction ($D_x$) et une source de pompage optique (P) du milieu amplificateur (m), caractérisé en ce que :

   - le milieu amplificateur (m) est inséré entre deux miroirs concaves et confocaux ($M_1$) et ($M_2$) dont le plan focal est situé au voisinage du centre du milieu (m), la direction ($D_x$) dudit milieu faisant un angle $\alpha/2$ avec la normale au plan focal des miroirs ;
   - ledit dispositif comprend des moyens d'entrée de faisceau optique à amplifier et des moyens de sortie de faisceau optique amplifié.

2. Dispositif d'amplification optique selon la revendication 1, caractérisé en ce que la source de pompage optique est placée perpendiculairement à la direction ($D_x$) du milieu (m) .

3. Dispositif d'amplification optique selon l'une des revendications 1 ou 2, caractérisé en ce que la source de pompage comprend une ou plusieurs diodes laser.

4. Dispositif d'amplification optique selon l'une des revendications 1 à 3, caractérisé en ce que les miroirs ($M_1$) et ($M_2$) sont de forme parabolique.

5. Dispositif d'amplification optique selon l'une des revendications 1 à 3, caractérisé en ce que les miroirs ($M_1$) et ($M_2$) sont de forme sphérique et que le dispositif comprend en sortie, des moyens de compensation d'astigmatie.

6. Dispositif d'amplification optique selon la revendication 2, caractérisé en ce que les miroirs ($M_1$) et ($M_2$) sont intégrés au milieu amplificateur.

7. Dispositif d'amplification optique selon la revendication 6, caractérisé en ce que les faces (1a) et (1b) du milieu amplificateur (m), perpendiculaires à l'axe optique du dispositif, comprennent une partie courbe munie d'un miroir ($M_1$) ou ($M_2$) et une partie plane transparente au faisceau optique à amplifier, taillée à l'incidence de Brewster.

8. Dispositif d'amplification optique selon la revendication 6, caractérisé en ce que les faces (1a) et (1b) du milieu amplificateur (m), sont de forme parabolique ou sphérique et son recouvertes partiellement d'un miroir ($M_1$) ou ($M_2$) et partiellement d'une couche antireflet, transparente au faisceau à amplifier.

FIG.1a

FIG.1b

FIG.2

FIG.4

FIG.3a

FIG.3b

Office européen
des brevets

**RAPPORT DE RECHERCHE EUROPEENNE**

Numero de la demande

EP 96 40 2096

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | OPTICS LETTERS, vol. 16, no. 3, 1 Février 1991, pages 144-146, XP000172784 GEORGES P ET AL: "HIGH-EFFICIENCY MULTIPASS TI:SAPPHIRE AMPLIFIERS FOR A CONTINUOUS-WAVE SINGLE-MODE LASER" * figure 1 * | 1 | H01S3/23 H01S3/0941 |
| A | IEEE PHOTONICS TECHNOLOGY LETTERS, vol. 6, no. 5, Mai 1994, NEW YORK US, pages 605-608, XP000446972 T.E.OLSON ET AL.: "Multipass diode-pumped Nd:Yag optical amplifiers at 1.06 um and 1.32 um" * page 1 * | 1,3,4 | |
| A | OPTICS LETTERS, vol. 18, no. 17, 1 Septembre 1993, WASHINGTON US, pages 1420-1422, XP000388158 H.PLAESSMANN ET AL.: "Multipass diode-pumped solid-state optical amplifier" * page 1 * | 1,3,4 | DOMAINES TECHNIQUES RECHERCHES (Int.Cl.6)  H01S |
| A | US-A-5 315 612 (ALCOCK ALFRED J ET AL) 24 Mai 1994 * revendications 6-8; figure 4 * | 1-3 | |
| A | US-A-3 852 684 (ROESS D ET AL) 3 Décembre 1974 * figures 5,6 * | 1,6,8 | |

Le présent rapport a été établi pour toutes les revendications

| Lieu de la recherche | Date d'achèvement de la recherche | Examinateur |
|---|---|---|
| LA HAYE | 7 Janvier 1997 | Galanti, M |